# FASCICULE DE BREVET EUROPEEN

(11) **EP 1 908 259 B1**
(45) Date de publication et mention de la délivrance du brevet: **22.10.2014**
(21) Numéro de dépôt: 06764129.0
(22) Date de dépôt: 11.07.2006
(51) Int. Cl.: H04L 29/08, H04N 7/173

(54) **APPAREIL ET PROCEDE D'ESTIMATION DU TAUX DE REMPLISSAGE DES TAMPONS D'ENTREE DE CLIENTS D'UNE DISTRIBUTION DE CONTENU TEMPS REEL**
VORRICHTUNG UND VERFAHREN ZUR SCHÄTZUNG DES FÜLLFAKTORS VON CLIENT-EINGANGSPUFFERN EINER ECHTZEIT-INHALTSVERTEILUNG
APPARATUS AND METHOD FOR ESTIMATING FILL FACTOR OF CLIENT INPUT BUFFERS OF A REAL TIME CONTENT DISTRIBUTION

(30) Priorité: 11.07.2005 FR 0552134
(43) Date de publication de la demande: 09.04.2008
(73) Titulaire: Thomson Licensing, 92130 Issy-les-Moulineaux (FR)
(72) Inventeur: STRAUB, Gilles, F-35690 Acigne (FR); FLEURY, Jean-François, F-56670 Riantec (FR); CHAMPEL, Mary-Luc, F-35220 Marpire (FR)
(74) Mandataire: Le Dantec, Claude
(86) Numéro de dépôt international: PCT/EP2006/064109
(87) Numéro de publication internationale: WO 2007/006786

(56) Documents cités:
- US-A1- 2003 165 150
- SUBHABRATA SEN AND JENNIFER REXFORD AND JAYANTA K. DEY AND JAMES F. KUROSE: "Online Smoothing of Variable-Bit-Rate Streaming Video" IEEE TRANSACTIONS ON MULTIMEDIA, vol. 2, no. 1, mars 2000 (2000-03), pages 37-48, XP002374722
- DCCP MEDIA STRATEGIES DCCP MEDIA STRATEGIES T PHELAN SONUS NETWORKS NOVEMBER 2003: "Strategies for Media Applications Using DCCP; draft-phelan-dccp-media-00.txt;" IETF STANDARD-WORKING-DRAFT, INTERNET ENGINEERING TASK FORCE, IETF, CH, novembre 2003 (2003-11), XP015033934 ISSN: 0000-0004
- REJAIE R ET AL: "Architectural considerations for playback of quality adaptive video over the Internet" IEEE INTERNATIONAL CONFERENCE ON NETWORKS. ICON. PROCEEDINGS OF ICON, 5 septembre 2000 (2000-09-05), pages 204-209, XP002177090

## Description

### 1. Domaine de l'invention.

La présente invention concerne le domaine de la distribution de contenu numérique depuis un serveur vers des clients. Et plus particulièrement le contexte de la distribution de vidéo sur un réseau de distribution tel que le réseau IP.

### 2. Arrière-plan technologique.

Il est courant maintenant de distribuer du contenu numérique tel que de la musique ou de la vidéo sur des réseaux de distribution à commutation de paquets tel que le réseau IP. En effet, le développement du réseau Internet a entraîné le développement de ces techniques.

La distribution de contenu numérique par des serveurs à des clients via un réseau IP. Ces réseaux se caractérisent par des distorsions temporelles dans l'acheminement des paquets appelées couramment « jitter » dans le jargon de l'homme du métier. Ils sont également sujets à des pertes de paquets dues, par exemple, à des congestions sur des passerelles intermédiaires transmettant les données entre le serveur et les clients. La restitution du contenu distribué impose des contraintes sur les distorsions maximums admissibles.

Pour faire face à ces distorsions et à ces pertes, les clients intègrent généralement un tampon d'entrée dans lequel sont stockés les paquets reçus. Ces tampons sont donc remplis par les paquets en provenance des serveurs via le réseau, tandis que le client les vide au fur et à mesure de la consommation des données par la restitution du contenu. Pour une bonne restitution du contenu, il faut que ces tampons d'entrée ne se vident complètement provoquant une famine du tampon, (« underflow » en anglais), ni ne se remplissent entièrement provoquant un débordement du tampon (« overflow » en anglais). En effet, en cas de famine la restitution va manquer de données et s'interrompre. Tandis qu'en cas de débordement le tampon ne va pas être en mesure de stocker des paquets arrivant et va donc provoquer la perte de données, entraînant, ici encore, des interruptions dans la restitution du contenu.

Selon le document intitulé « Online smoothing of VBR streaming video » (ou « lissage en ligne de vidéo de flux à débit variable » en français), écrit par Subhabrata & Al dans « IEEE transactions multimédia » en mars 2000, on met en oeuvre une technique de lissage de flux afin d'éviter les famines ou débordement des mémoires tampons d'un appareil. Néanmoins, cette technique n'est pas optimisée pour la transmission de données dans un réseau où on maîtrise mal le temps de transmission de flux (cas notamment des réseaux où on met en oeuvre une technique du meilleur effort (ou « best effort » en anglais)).

La transmission sur un réseau IP n'offrant pas de garanties en terme de latence et de perte de paquets, on ne peut assurer que ces situations de famine ou de débordement ne peuvent arriver. Dans ce cas il est intéressant de pouvoir détecter l'occurrence de ces situation de manière à pouvoir prendre des contre mesures permettant de supprimer ou du moins de limiter les conséquences pour l'utilisateur de ces problèmes.

Il est connu, par exemple du brevet JP9298734, d'effectuer une surveillance du taux de remplissage du tampon d'entrée d'un appareil au niveau de l'appareil lui-même. En cas de famine ou de débordement, l'appareil émet une alerte à destination du serveur. Celui-ci prenant alors des mesures pour faire face au problème survenant.

Cette façon de faire implique premièrement un dialogue entre le client et le serveur. Ce dialogue induit une latence entre la détection du problème et sa prise en compte. D'autre part, cette prise en compte n'est généralement possible que si la distribution de contenu est faite depuis le serveur à destination d'un seul client, distribution dite unipoint (« unicast » en anglais). Lorsque le serveur distribue le même contenu à de multiples clients, distribution dite multipoint (« multicast » en anglais), le serveur n'est plus à même de prendre des mesures qui concerneront automatiquement tous les clients pour résoudre un problème se passant sur un seul.

### 3. Résumé de l'invention.

L'invention propose une solution de détection des situations de famine et de débordement du tampon d'entrée d'un client à une distribution temps réel de contenu. Cette détection est faite en amont des clients par une estimation dynamique du taux de remplissage des tampons d'entrée de ces clients. De cette façon il est possible de prédire l'occurrence de situations de famines ou de débordement et de prendre des mesures comme l'insertion de séquences vidéo stockées ou la mémorisation de paquets en attente.

L'invention concerne un appareil connectable à un réseau de distribution de contenu par paquets, le contenu étant envoyé sous la forme d'un flux de données numériques à destination d'au moins un client, le au moins un client possédant un tampon d'entrée dans lequel il stocke les données reçues avant de les décoder en vue de la restitution du contenu l'appareil possédant des moyens pour faire transiter des paquets de données entre le réseau de distribution et le au moins un client, connecté audit réseau de distribution, ces moyens pour faire transiter des paquets de données faisant transiter tous les paquets à destination du tampon du client, l'appareil comprenant des moyens de calcul d'une estimation du taux de remplissage du tampon d'entrée du au moins un client en fonction d'au moins un paramètres dudit client. Le au moins un paramètre du client est, par exemple, pris parmi les paramètres suivants :
- la taille du tampon d'entrée du au moins un client connecté au réseau de distribution ;
- la quantité de données que le au moins un client stocke avant de déclencher le décodage quand il reçoit un flux de données;
- le débit de restitution que le au moins un client utilise pour vider le tampon d'entrée.

Afin d'éviter qu'un appareil n'affiche un contenu non souhaitable (par exemple écran noir ou image figée), selon l'invention, l'appareil est adapté pour envoyer vers un client une séquence de remplacement de contenu quand le taux de remplissage estimé du tampon d'entrée du client passe au dessous d'un seuil.

Selon un mode particulier de réalisation l'appareil comprend en outre des moyens stockage de séquences de remplacement de contenu temps réel.

Selon un mode particulier de réalisation l'appareil est adapté pour stocker temporairement les paquets de données à destination d'un client dont l'estimation du taux de remplissage de son tampon d'entrée passe au dessus d'un seuil.

Selon un mode particulier de réalisation l'appareil est adapté pour envoyer un message d'alerte quand l'estimation du taux de remplissage d'un client passe au dessous d'un seuil.

Selon un mode particulier de réalisation l'appareil est adapté pour envoyer un message d'alerte quand l'estimation du taux de remplissage d'un client passe au dessus d'un seuil.

L'invention concerne également un procédé d'estimation du taux de remplissage du tampon d'entrée d'un appareil de décodage d'un contenu envoyé sous la forme d'un flux de données numériques, appelé client, par un appareil de surveillance connectable à un réseau de distribution de contenu par commutation de paquets, l'appareil de surveillance possédant des moyens pour faire transiter des paquets de données entre le réseau de distribution et le client connecté audit réseau de distribution, ces moyens pour faire transiter des paquets de données faisant transiter tous les paquets de données entre le client et le réseau de distribution, ce procédé comprenant une étape de calcul d'une estimation du taux de remplissage du tampon d'entrée du au moins un client en fonction de la taille de son tampon d'entrée, de la quantité de données qu'il stocke avant de déclencher le décodage et des paquets de données ayant transité par ledit appareil de surveillance à destination du au moins un client.

Afin d'éviter qu'un appareil n'affiche un contenu non souhaitable, selon l'invention, le procédé comprend un envoi vers un client, d'une séquence de remplacement de contenu quand le taux de remplissage estimé du tampon d'entrée dudit client passe au dessous d'un seuil.

Selon un mode particulier de réalisation le calcul de l'estimation du taux de remplissage est effectué de manière périodique.

Selon un mode particulier de réalisation le calcul de l'estimation du taux de remplissage est effectué chaque fois qu'un paquet de données est envoyé vers le client.

Selon un mode particulier de réalisation le procédé comprend en outre une étape d'envoi d'une séquence stockée lorsque l'estimation du taux de remplissage passe sous un seuil.

Selon un mode particulier de réalisation le procédé comprend en outre une étape de stockage temporaire des paquets de données à destination d'un client dont l'estimation du taux de remplissage de son tampon d'entrée passe au dessus d'un seuil.

Selon un mode particulier de réalisation le procédé comprend en outre une étape d'envoi d'un message d'alerte quand l'estimation du taux de remplissage d'un client passe au dessous d'un seuil.

Selon un mode particulier de réalisation le procédé comprend comprenant en outre une étape d'envoi d'un message d'alerte quand l'estimation du taux de remplissage d'un client passe au dessus d'un seuil.

### 4. Description des figures.

L'invention sera mieux comprise, et d'autres particularités et avantages apparaîtront à la lecture de la description qui va suivre, la description faisant référence aux dessins annexés parmi lesquels :
La figure 1 représente l'architecture de distribution de contenu de l'exemple de réalisation de l'invention.
La figure 2 représente un détail de cette architecture mettant en évidence la prédiction du remplissage des tampons dans l'exemple de réalisation.
La figure 3 représente l'architecture matérielle d'un appareil implémentant l'exemple de réalisation de l'invention.

### 5. Description détaillée de l'invention.

L'invention concerne tous types de distribution de contenu numérique temps réel sur des réseaux à commutation de paquets. L'exemple de réalisation se situe dans le cadre plus particulier de la distribution de vidéo sur un réseau IP, comme par exemple Internet ou un réseau de distribution dédié.

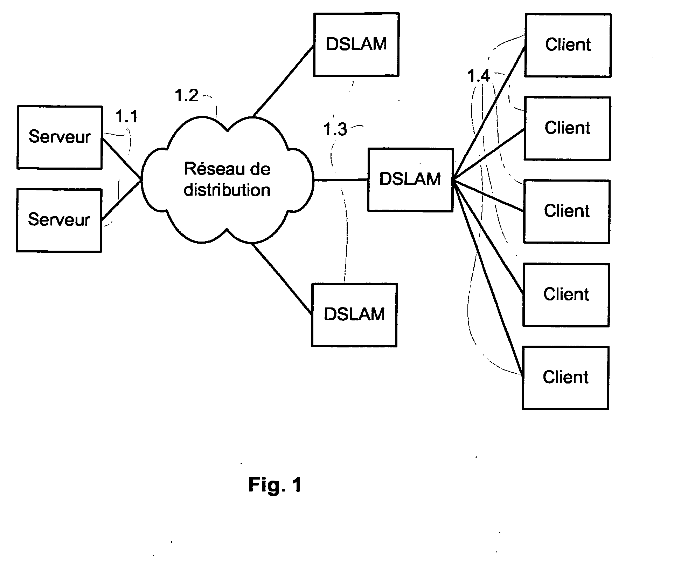

Un exemple d'architecture reflétant le cadre de l'exemple de réalisation est illustré en **figure 1**. Sur cette figure, on peut voir des serveurs, référencés 1.1, de distribution de contenu numérique temps réels. Ces serveurs sont connectés à un réseau de distribution, référencé 1.2. L'exemple de réalisation se place dans le cadre où les clients finaux, référencés 1.4, sont connectés au réseau de distribution via la technologie ADSL (« Asynchronous Digital Subscriber Line » en anglais). Cette technologie permet la connexion à haut débit du client au réseau de distribution via la ligne téléphonique. Pour ce faire, le central téléphonique est équipé d'un équipement de connexion appelé DSLAM, référencé 1.3, (« Digital Subscriber Line Access Multiplexer » en anglais). Ces DSLAM étant connectés au réseau de distribution, ils permettent conjointement à un modem dit modem ADSL chez le client de multiplexer la connexion numérique et les accès voix sur la liaison téléphonique. De cette manière chaque client, via le DSLAM, est connecté au réseau de distribution de contenu. Bien que l'exemple de réalisation de l'invention se place dans le cadre d'un accès ADSL du client au réseau de distribution, l'invention n'est pas limitée à ce cadre et fonctionne de la même manière sur tout type de connexion entre le client et le réseau de distribution. En outre, l'invention n'est nécessairement mise en oeuvre dans un DSLAM mais, au contraire peut être implantée dans tout appareil faisant transiter des paquets de données entre un réseau de distribution (par exemple réseau internet ou réseau ADSL) et la mémoire tampon d'au moins un client connecté au réseau de distribution. Avantageusement, la liaison entre l'appareil et la mémoire tampon d'un client ne subit pas de perturbations influant sur le taux de remplissage de cette mémoire tampon (notamment perturbations du type gigue ou perte de paquets). Il s'agit par exemple d'une liaison point-à-point vers le client ou un point d'entrée de réseau local (par exemple réseau domestique) auquel appartient le client.

Le serveur contient, ou est capable de générer, des fichiers de données numériques, typiquement des services audio et vidéo. Ces fichiers sont distribués sous la forme de flux de données temps réel encodés selon la norme MPEG (« Moving Picture Engineering Group » en anglais). Selon cette norme les données sont divisées en paquets, ces paquets étant ensuite distribués sur le réseau à destination des clients. Le mode de diffusion multipoint consiste pour un émetteur ou un groupe d'émetteurs, à transmettre un paquet à destination d'un groupe de clients, dans un mode de transmission multipoint (« multicast » en anglais). Dans ce mode, les paquets sont émis à destination d'une adresse dite adresse de diffusion multipoint et seront acheminés à destination de tous les destinataires appartenant au groupe de diffusion. On dira d'un client qui rejoint un groupe de diffusion qu'il s'abonne au groupe et d'un client qui quitte le groupe qu'il se désabonne du groupe.

Le mode de diffusion multipoint est utilisé dans la pratique pour économiser la bande passante intermédiaire dans le réseau lorsqu'une source émet des données vers un groupe de destinataires, tel que c'est le cas lors de la diffusion de services TV (« live TV » en anglais). En effet, dans ce cas, l'utilisation d'un mode de transmission point à point implique que les données soient envoyées autant de fois qu'il y a de destinataires. Ce mode entraîne la duplication des paquets sur les parties du réseau communes aux chemins entre la source et les différents destinataires. Au contraire la diffusion multipoint permet de n'envoyer les données qu'une fois, ces données étant dupliquées sur les routeurs du réseau, en fonction des chemins menant aux destinataires appartenant au groupe de diffusion.

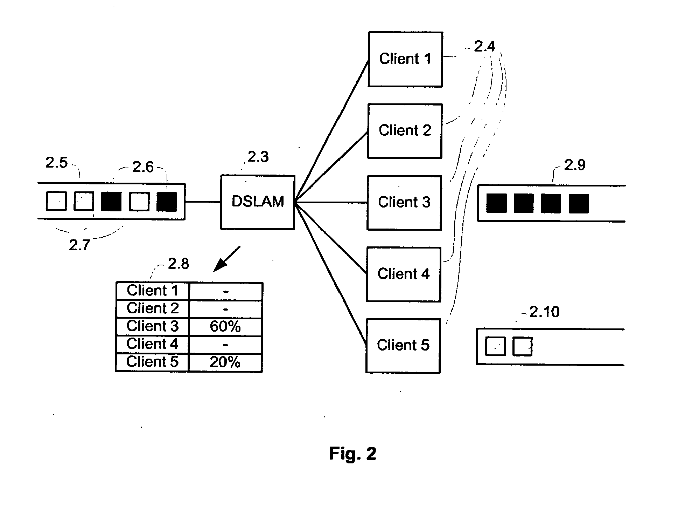

La **figure 2** illustre plus précisément le fonctionnement de la distribution de flux vidéo en provenance de serveurs via un réseau de distribution à des clients dans l'exemple de réalisation de l'invention. Cette figure se concentre sur ce qui se passe au niveau du client et du DSLAM. Les clients référencés 2.4 et numérotés de 1 à 5 sont connectés à un même DSLAM référencé 2.3. La figure illustre aussi les tampons d'entrée référencés 2.9 et 2.10 des clients 3 et 4. Les données référencées 2.5 arrivant des serveurs via le réseau de distribution sur le DSLAM comprennent deux flux de données. Un premier flux dont les paquets, référencés 2.6, en noir est à destination du client 3 tandis que le second flux dont les paquets, référencés 2.7, est à destination du client 5. On retrouve donc logiquement des paquets de données noirs dans le tampon 2.9 du client 3 et des paquets blancs dans le tampon 2.10 du client 5. Le DSLAM 2.3, outre son rôle de gestion de la connexion ADSL entre le client et le réseau agit en routeur de premier niveau entre les clients et le réseau. Tout le trafic entre le réseau de distribution et les clients qu'il connecte passe donc par lui. Dans le sens descendant, il reçoit tous les paquets de données, contenu temps réel et autre, du réseau via son interface au réseau et les distribue aux clients destinataires. Dans le sens montant, il reçoit tous les paquets envoyés par les clients et les retransmet vers le réseau. Dans le cadre de l'exemple de réalisation de l'invention il va contenir la table référencée 2.8, dont la fonction sera décrite plus loin.

Les clients sont typiquement des décodeurs de télévision numérique dans l'exemple de réalisation, mais il peut s'agir de tout appareil permettant la restitution d'un contenu temps réel, comme une télévision numérique, une chaîne hi fi numérique ou autre. Ces clients consomment donc les paquets de données contenus dans le tampon pour la restitution du contenu. Le rythme de consommation est réglé par la vitesse de restitution. La norme MPEG prévoit, par exemple, la présence de références temporelles appelées PTS (« Présentation Time Stamp » en anglais) insérées régulièrement dans certains paquets de données et définissant le moment auquel les données associés doivent être présentées donc restituées par le client. Ces données associées sont typiquement des images pour la vidéo et des échantillons sonores pour le son. Le respect du temps réel et la bonne restitution du contenu nécessitent donc le respect de ces PTS et l'affichage au moment prévu des données.

Si les paquets de données en provenance du réseau n'arrivent pas assez vite dans le tampon d'entrée du client, celui-ci peut se vider et en arriver à une situation de famine. Dans ce cas, le client n'est plus à même de respecter ses contraintes temps réel et de restituer les données au moment prévu, il se passe une interruption de service. Si le contenu est vidéo, des images vont manquer et l'utilisateur percevra un écran noir où le gel de l'image selon la façon dont le client va réagir au manque d'information. Les causes d'une telle situation peuvent être multiples. Il peut s'agir d'un serveur soumis à une trop grande sollicitation qui ne parvient plus à fournir ses données. Il peut encore s'agir d'une congestion dans le réseau retardant ou même perdant certains paquets de données. D'un autre côté, un débordement du tampon d'entrée peut également se produire. Dans ce cas des paquets de données vont être reçus par le client que celui-ci ne sera pas à même de stocker. Ces paquets seront donc perdus. Ces paquets manquants vont donc provoquer des interruptions de service par manque de données. Ces débordements peuvent, par exemple, venir de la réception groupée d'un grand nombre de paquets ou d'une mauvaise synchronisation entre le serveur et le client.

Il est donc important pour la qualité du service perçue par l'utilisateur d'éviter, autant que faire se peut, ces situations de famine et de débordement. Une solution connue consiste à surdimensionner le réseau de distribution de façon à éviter les congestions et permettre une circulation fluide et le moins perturbée possible des paquets de données. Cette solution pose évidemment le problème du coût et ne pourra pas être utilisée dans tous les cas. Sur un réseau dimensionné plus juste, il n'est pas possible de garantir que des situations de famine ou de débordement ne peuvent pas se produire. Dans ce cas une détection prédictive de ces situations peut permettre de déclencher une alerte. Cette alerte pouvant être prise en compte pour lancer des actions limitant les gênes liées aux interruptions de services.

Il existe des systèmes, comme celui décrit dans le document JP09298734 où une unité de surveillance du taux de remplissage du tampon est implémentée sur le client. Quand une famine ou un débordement est prêt de se produire il est alors possible au client d'envoyer un message d'alerte au serveur. Le serveur adapte alors son taux d'émission des données pour éviter que la famine ou le débordement ne survienne. Cette solution pose principalement deux problèmes. D'une part, elle implique des échanges de messages sur le réseau entre le client et le serveur. Ces échanges introduisent une latence dans la réaction du serveur et donc dans la correction apportée. D'autre part, la correction provenant d'une adaptation du serveur, cela ne peut fonctionner que si la distribution des données est faite par le serveur à destination exclusive d'un seul client. En effet, tous les clients d'un même contenu n'ayant pas le même taux de remplissage de leurs tampons d'entrée, il n'est pas possible de réguler l'émission pour convenir à tous les clients.

La solution proposée dans l'exemple de réalisation de l'invention consiste en une surveillance du taux de remplissage des tampons d'entrée des clients. Cette surveillance est faite en amont des clients dans le réseau. Elle peut, par exemple, se faire au niveau du DSLAM. De manière à pouvoir initialiser cette surveillance, le DSLAM doit connaître pour les clients auxquels il est connecté et dont il va surveiller les tampons, la taille de son tampon d'entrée, ainsi que la quantité de données que le décodeur va stocker avant de lancer le décodage. Il est possible de prévoir la communication par le client de la taille de son tampon au DSLAM ainsi que cette quantité de stockage initiale. Il existe plusieurs manières d'effectuer cette communication. Dans le cas d'une implémentation de l'invention sur le DSLAM, le plus simple est d'intégrer cette transmission à l'échange de messages initialisant la connexion. En effet la connexion s'établie entre le client et le DSLAM en utilisant un protocole d'établissement de liaison point à point tel que PPPoE (« Point to Point Protocol over Ethernet » en anglais), PTP (« Point to Point Tunneling Protocol » en anglais) ou encore PPPoA (« Point to Point Protocol over ATM » en anglais). Tous ces protocoles intègrent une phase préliminaire de négociation de paramètres, la taille du tampon d'entrée et la quantité de stockage initiale peut être ajoutée aux paramètres échangés pendant cette phase.

Il est également possible de prévoir une requête par le DSLAM pour demander l'information au client, ou encore l'entrée de ce paramètre dans le DSLAM par l'administrateur du réseau de distribution et donc du DSLAM, ou toute autre méthode permettant au DSLAM d'acquérir cette information.

Une fois que le DSLAM, possède l'information sur la taille du tampon du client et la quantité de données stockées avant le déclenchement du décodage, il est possible d'estimer le taux de remplissage du tampon d'entrée du décodeur. En effet, le DSLAM, du fait qu'il est situé sur le dernier lien entre le réseau et le client possède la connaissance de toutes les données reçues par le client. Il connaît la vitesse de décodage et donc de consommation des données par le client. Cette information peut être déduite du flux ou faire partie des paramètres que le client envoie au DSLAM. Cette information dépend du type de flux de données temps réel envoyé, de son taux de compression et de son codage. L'estimation se fait en deux phases, dans un premier temps le décodage n'est pas lancé sur le client. Le tampon se remplit donc des données envoyées par le DSLAM, sans consommation. Une fois que la quantité de données envoyées a atteint la quantité de stockage initiale, le décodage et donc la consommation des données commence sur le client. On entre donc dans une deuxième phase. Dans cette deuxième phase, le DSLAM estime le taux de remplissage du tampon par un calcul des données qui ont été envoyées au client moins les données consommées. Le DSLAM peut de cette manière maintenir une table, comme celle illustrée figure 2, et référencée 2.8, donnant pour tous les clients le taux de remplissage du tampon d'entrée. Ainsi, sur la figure 2, la table 2.8 permet de voir que le tampon d'entrée du client 3 est rempli à 60 %, tandis que celui du client 5 est rempli à 20%. Les clients 1, 2 et 4, ne reçoivent pas de flux de contenu temps réels. Le DSLAM, peut donc connaître à tout instant les taux de remplissage des tampons d'entrées des clients recevant un flux de contenu temps réel et ceci sans impliquer des échanges de messages entre le DSLAM et les clients. Le calcul de l'estimation du taux de remplissage des tampons doit être faite régulièrement. Elle peut se faire à chaque paquet envoyé vers le client où de manière périodique. Pendant la première phase, le taux de remplissage du tampon correspond à la quantité de données envoyées au client. Pendant la seconde phase, ce taux correspond à la totalité des données envoyées moins les données consommées.

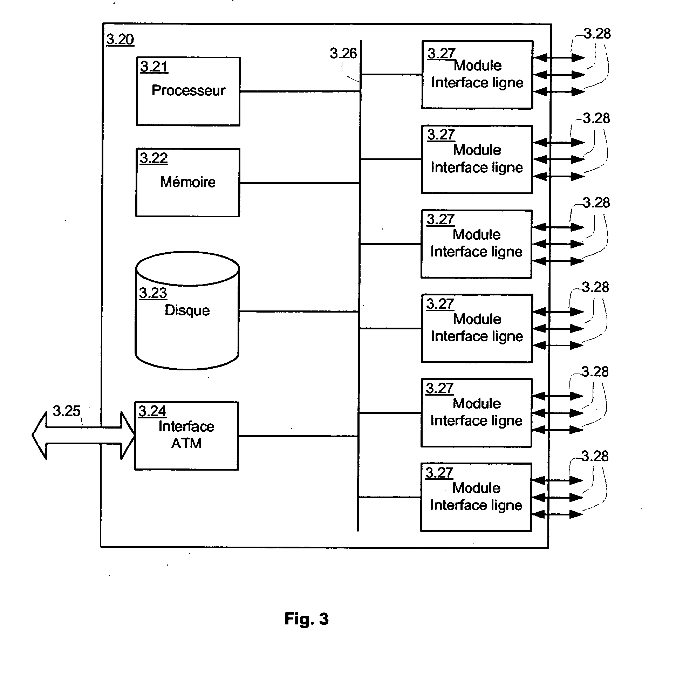

Cette connaissance étant acquise, il est maintenant possible pour le DSLAM de savoir quand l'un des clients va se retrouver en débordement ou en famine. On peut, par exemple, fixer des seuils déclenchant une alerte. On pourra, par exemple, fixer ces seuils à 5% et 95% et déclencher l'alerte quand le taux de remplissage est inférieur à 5% ou supérieur à 95%. Cette connaissance permet de déclencher une alerte ou des actions correctives. Un mode de réalisation de l'invention prévoit, par exemple, que le DSLAM contient des séquences vidéo préenregistrées ou générées à la volée, ces séquence pouvant être stockées en mémoire ou sur disque, référencé 3.23 sur la figure 3, au sein du DSLAM. En cas de famine, il est possible d'envoyer au client, des paquets de données d'une telle séquence préenregistrée en lieu et place des paquets manquant pour le programme qu'il est en train de recevoir. L'utilisateur percevra donc une interruption de son programme pendant laquelle il visualisera une séquence de remplacement ou de substitution, qui pourra être, par exemple, des annonces de programmes, un message spécifique lié au condition de transmission du contenu requis, des séquences publicitaires ou tout type de séquence que l'on peut souhaiter lui mettre à disposition. L'impact sera vraisemblablement moins négatif qu'un « écran noir » ou qu'un gel de l'image.

L'architecture d'un tel DSLAM selon l'exemple de réalisation de l'invention est illustrée **figure 3**. L'appareil de surveillance, référencé 3.20, contient un processeur référencé 3.21 permettant l'exécution des traitements, une mémoire de travail référencée 3.22 pour le stockage des données comme la table 2.8, une mémoire de stockage référencée 3.23 pouvant être un disque et permettant de stocker, par exemple, des séquences de remplacement selon un mode particulier de réalisation de l'invention. L'appareil possède une interface référencée 3.24 le reliant au réseau de distribution de contenu au moyen d'un lien référencé 3.25. Dans l'exemple de réalisation ce lien et cette interface sont des liens ATM (« Asynchronous Transfer Mode » en anglais), mais ce peut aussi être par exemple de l'Ethernet Gigabit. D'un autre côté, une série de modules d'interface ligne référencés 3.27 permettent chacun d'établir des connexions ADSL référencées 3.28 avec des clients, typiquement 16, par la ligne téléphonique. Ces modules, le processeur, la mémoire, le disque et l'interface avec le réseau de distributions communiquent par un bus interne référencé 3.26. Les communications entre le réseau de distribution et les clients sont donc mélangées sur le lien 3.25 et distribuées sur les liens 3.28 en fonction du client impliqué.

En cas de débordement, on peut prévoir que le DSLAM, mémorise dans un tampon qui lui est propre les données que le client n'est plus à même de recevoir. Ces données lui seront envoyées retardées quand le taux de remplissage a diminué.

Il est également possible de prévoir l'envoi de messages explicatifs vers le client. On peut aussi prévoir des messages d'alerte envoyés vers une supervision du réseau de distribution. De cette manière les administrateurs du réseau de distribution peuvent mesurer la qualité du service rendu et résoudre les problèmes apparaissant dans la distribution des services. Il est possible de maintenir des statistiques sur les incidents de distribution des services de façon à dimensionner au mieux le réseau de distribution.

L'exemple de réalisation de l'invention décrit une implémentation au sein du DSLAM de l'invention, mais celle-ci peut s'implémenter sur d'autres appareils, voire être implémenté sur un appareil dédié branché sur le lien arrivant au DSLAM ou sur le lien entre le DSLAM et le client. La seule condition nécessaire étant d'implémenter l'invention au sein du réseau en un point qui voit passer l'intégralité des données à destination du client de façon à permettre une estimation fiable des données que celui-ci reçoit. L'invention peut, par exemple, être implémentée sur un appareil branché sur le lien en amont du DSLAM et fonctionnant comme une sonde analysant le trafic sur le lien. De même, l'exemple de réalisation se place dans le cas d'une connexion par ADSL des clients mais peut tout aussi bien fonctionner quel que soit le mode de connexion et pourra être implémentée, par exemple, sur une tête de réseau câblée dans le cas d'une connexion par câble, où sur un point d'accès sans fil dans le cas d'une connexion sans fil entre le client et le réseau de distribution.

## Revendications

1. Appareil (2.3) connectable à un réseau de distribution (1.2) de contenu par paquets, le contenu étant envoyé sous la forme d'un flux de données numériques à destination d'au moins un client (2.4), le au moins un client possédant un tampon d'entrée (2.9, 2.10) dans lequel il stocke les données reçues avant de les décoder en vue de la restitution du contenu l'appareil possédant des moyens (3.27) pour faire transiter des paquets de données entre le réseau de distribution (1.2) et le au moins un client (2.4), connecté audit réseau de distribution (1.2), ces moyens pour faire transiter des paquets de données faisant transiter tous les paquets à destination du tampon du client, **caractérisé en ce qu'**il comprend :
- des moyens de calcul (3.21) d'une estimation du taux de remplissage du tampon d'entrée du au moins un client en fonction d'au moins un paramètres dudit client, pris parmi les paramètres suivants :
- la taille du tampon d'entrée du au moins un client connecté au réseau de distribution ;
- la quantité de données que le au moins un client stocke avant de déclencher le décodage quand il reçoit un flux de données;
- le débit de restitution que le au moins un client utilise pour vider le tampon d'entrée ;
- et des moyens pour envoyer vers un client une séquence de remplacement de contenu quand le taux de remplissage estimé du tampon d'entrée dudit client passe au dessous d'un premier seuil.

2. Appareil selon la revendication 1, comprenant en outre des moyens stockage de séquences de remplacement de contenu temps réel.

3. Appareil selon l'une quelconque des revendications 1 et 2, adapté pour stocker temporairement les paquets de données à destination d'un client dont l'estimation du taux de remplissage de son tampon d'entrée passe au dessus d'un second seuil.

4. Appareil selon l'une quelconque des revendications 1 à 3, adapté pour envoyer un message d'alerte quand l'estimation du taux de remplissage d'un client passe au dessous d'un troisième seuil.

5. Appareil selon l'une quelconque des revendications 1 à 4, adapté pour envoyer un message d'alerte quand l'estimation du taux de remplissage d'un client passe au dessus d'un quatrième seuil.

6. Appareil selon l'une quelconque des revendications 1 à 5, **caractérisé en ce qu'**il est du type multiplexeur d'accès à une ligne numérique de client (DSLAM).

7. Procédé d'estimation du taux de remplissage du tampon d'entrée d'un appareil de décodage d'un contenu envoyé sous la forme d'un flux de données numériques, appelé client, par un appareil de surveillance connectable à un réseau de distribution de contenu par commutation de paquets, l'appareil de surveillance possédant des moyens pour faire transiter des paquets de données entre le réseau de distribution et le client connecté audit réseau de distribution, ces moyens pour faire transiter des paquets de données faisant transiter tous les paquets de données entre le client et le réseau de distribution, **caractérisé en ce qu'**il comprend au moins les étapes suivantes :
- le calcul d'une estimation du taux de remplissage du tampon d'entrée du au moins un client en fonction de la taille de son tampon d'entrée, de la quantité de données qu'il stocke avant de déclencher le décodage et des paquets de données ayant transité par ledit appareil de surveillance à destination du au moins un client.
- et l'envoi vers un client, d'une séquence de remplacement de contenu quand le taux de remplissage estimé du tampon d'entrée dudit client passe au dessous d'un premier seuil.

8. Procédé selon la revendication 7, où le calcul de l'estimation du taux de remplissage est effectué de manière périodique.

9. Procédé selon l'une quelconque des revendication 7 et 8, où le calcul de l'estimation du taux de remplissage est effectué chaque fois qu'un paquet de données est envoyé vers le client.

10. Procédé selon l'une des revendications 7 à 9, comprenant en outre une étape de stockage temporaire des paquets de données à destination d'un client dont l'estimation du taux de remplissage de son tampon d'entrée passe au dessus d'un deuxième seuil.

11. Procédé selon l'une des revendications 7 à 10, comprenant en outre une étape d'envoi d'un message d'alerte quand l'estimation du taux de remplissage d'un client passe au dessous d'un troisième seuil.

12. Procédé selon l'une des revendications 7 à 11, comprenant en outre une étape d'envoi d'un message d'alerte quand l'estimation du taux de remplissage d'un client passe au dessus d'un quatrième seuil.

## Patentansprüche

1. Vorrichtung (2.3), anschließbar an ein Netz zur paketweisen Verteilung (1.2) von Inhalt, wobei der Inhalt in Form eines digitalen Datenstroms an mindestens einen Clienten (2.4) gesendet wird, wobei der mindestens eine Client über einen Eingangspuffer (2.9, 2.10) verfügt, in welchem er die erhaltenen Daten lagert, bevor sie zum Zwecke der Wiedergabe des Inhalts decodiert werden, wobei die Vorrichtung über Mittel (3.27) verfügt, um Datenpakete zwischen dem Verteilnetz (1.2) und dem mindestens einen Clienten (2.4), der an besagtes Verteilnetz (1.2) angeschlossen ist, zu übertragen, wobei durch diese Mittel zur Übertragung von Datenpaketen alle Pakete hin zum Puffer des Clienten übertragen werden, **dadurch gekennzeichnet, dass** sie Folgendes umfasst:
- Mittel zur Berechnung (3.21) einer Schätzung des Füllfaktors des Eingangspuffers des mindestens einen Clienten in Abhängigkeit von mindestens einem Parameter des besagten Clienten, der unter den folgenden Parametern ausgesucht wurde:
- die Größe des Eingangspuffers des mindestens einen Clienten, der an das Verteilnetz angeschlossen ist
- die Datenmenge, die der mindestens eine Client vor dem Starten der Decodierung lagert, wenn er einen Datenstrom erhält
- die Wiedergabemenge, die der mindestens eine Client verwendet, um den Eingangspuffer zu leeren
- und Mittel zum Versenden einer Inhalts-Ersatzsequenz an einen Clienten, wenn der geschätzte Füllfaktor des Eingangspuffers des besagten Clienten unterhalb eines ersten Schwellenwertes liegt.

2. Vorrichtung nach Anspruch 1, bestehend unter anderem aus Mitteln zur Lagerung von Echtzeitinhalts-Ersatzsequenzen.

3. Vorrichtung nach irgendeinem der Ansprüche 1 und 2, geeignet für eine vorübergehende Lagerung der für einen Clienten bestimmten Datenpakete, bei dem die Schätzung des Füllfaktors seines Eingangspuffers oberhalb eines zweiten Schwellenwertes liegt.

4. Vorrichtung nach irgendeinem der Ansprüche 1 bis 3, geeignet für das Versenden einer Warnnachricht, wenn die Schätzung des Füllfaktors eines Clienten unterhalb eines dritten Schwellenwertes liegt.

5. Vorrichtung nach irgendeinem der Ansprüche 1 bis 4, geeignet für das Versenden einer Warnnachricht, wenn die Schätzung des Füllfaktors eines Clienten oberhalb eines vierten Schwellenwertes liegt.

6. Vorrichtung nach irgendeinem der Ansprüche 1 bis 5, **dadurch gekennzeichnet, dass** es sich dabei um einen Zugangsmultiplexer zu einer digitalen Clienten-Anschlussleitung (DSLAM) handelt.

7. Verfahren zur Schätzung des Füllfaktors des Eingangspuffers einer Vorrichtung zur Decodierung eines in Form eines digitalen Datenstroms gesendeten Inhalts, Client genannt, durch ein Überwachungsgerät, das an ein Netz zur paketvermittelten Inhaltsverteilung anschließbar ist, wobei das Überwachungsgerät mit Mitteln versehen ist, um Datenpakete zwischen dem Verteilnetz und dem mit besagtem Verteilnetz verbundenen Clienten zu übertragen, wobei durch diese Mittel zur Übertragung von Datenpaketen alle Datenpakete zwischen dem Clienten und dem Verteilnetz übertragen werden, **dadurch gekennzeichnet, dass** es mindestens die folgenden Schritte umfasst:
- die Berechnung einer Schätzung des Füllfaktors des Eingangspuffers des mindestens einen Clienten in Abhängigkeit von der Größe seines Eingangspuffers, von der Qualität der von ihm vor Starten der Decodierung gelagerten Daten und von den Datenpaketen, die durch das besagte Überwachungsgerät hin zu dem mindestens einen Clienten übertragen wurden,
- und die Versendung einer Inhalts-Ersatzsequenz an einen Clienten, wenn der geschätzte Füllfaktor des Eingangspuffers des besagten Clienten unterhalb eines ersten Schwellenwertes liegt.

8. Verfahren nach Anspruch 7, bei dem die Berechnung der Schätzung des Füllfaktors in regelmäßiger Form vorgenommen wird.

9. Verfahren nach irgendeinem der Ansprüche 7 und 8, bei dem die Berechnung der Schätzung des Füllfaktors jedes Mal dann vorgenommen wird, wenn ein Datenpaket an den Clienten gesendet wird.

10. Verfahren nach einem der Ansprüche 7 bis 9, bestehend unter anderem aus einem Schritt zur vorübergehenden Lagerung der für einen Clienten bestimmten Datenpakete, bei dem die Schätzung des Füllfaktors seines Eingangspuffers oberhalb eines zweiten Schwellenwertes liegt.

11. Verfahren nach einem der Ansprüche 7 bis 10, bestehend unter anderem aus einem Schritt zum Versenden einer Warnnachricht, wenn die Schätzung des Füllfaktors eines Clienten unterhalb eines dritten Schwellenwertes liegt.

12. Verfahren nach einem der Ansprüche 7 bis 11, bestehend unter anderem aus einem Schritt zum Versenden einer Warnnachricht, wenn die Schätzung des Füllfaktors eines Clienten oberhalb eines vierten Schwellenwertes liegt.

## Claims

1. Device (2.3) that can be connected to a content distribution network (1.2) by packets, the content being sent in the form of a stream of digital data intended for at least one client (2.4), the at least one client having an input buffer (2.9, 2.10) in which it stores the data received before decoding it with a view to recovering the content the device having means (3.27) to transit data packets between the distribution network (1.2) and the at least one client (2.4), connected to the said distribution network (1.2), these means to transit data packets transiting all the packets intended for the buffer of the client, **characterised in that** it comprises:
- calculation means (3.21) of an estimation of the filling rate of the input buffer of the at least one client according to at least one parameter of the said client, taken from among the following parameters:
- the size of the input buffer of the at least one client connected to the distribution network,
- the quantity of data that the at least one client stores before triggering the decoding when it receives a data stream,
- the recovery bit-rate that the at least one client uses to empty the input buffer,
- and means to send a content replacement sequence to a client when the estimated filling rate of the input buffer of the said client crosses below a first threshold.

2. Device according to claim 1, also comprising storage means for real-time content replacement sequences.

3. Device according to any one of claims 1 and 2, suitable to temporarily store the data packets intended for a client for which the estimation of the filling rate of its input buffer crosses above a second threshold.

4. Device according to any one of claims 1 to 3, suitable to send a warning message when the estimation of the filling rate of a client crosses below a third threshold.

5. Device according to any one of claims 1 to 4, suitable to send a warning message when the estimation of the filling rate of a client crosses above a fourth threshold.

6. Device according to any one of claims 1 to 5, **characterised in that** it is of the Digital Subscriber Line Access Multiplexer (DSLAM) type.

7. Method for estimating the filling rate of the input buffer of a decoding device of a content sent in the form of a stream of digital data, called client, by a surveillance device that can be connected to a content distribution network by packet switching, the surveillance device having means to transit data packets between the distribution network and the client connected to the said distribution network, these means to transit data packets transiting all the data packets between the client and the distribution network, **characterised in that** it comprises at least the following steps:
- the calculation of an estimation of the filling rate of the input buffer of the at least one client according to the size of its input buffer, the quantity of data that it stores before triggering the decoding and the data packets having transited through the said surveillance device intended for the at least one client.
- and the sending of a content replacement sequence to a client when the estimated filling rate of the input buffer of the said client crosses below a first threshold.

8. Method according to claim 7, wherein the calculation of the estimation of the filling rate is carried out in a regular manner.

9. Method according to any one of claims 7 and 8, wherein the calculation of the estimation of the filling rate is carried out each time a data packet is sent to the client.

10. Method according to any one of claims 7 to 9, moreover comprising a step for temporarily storing the data packets intended for a client for which the estimation of the filling rate of its input buffer crosses above a second threshold.

11. Method according to one of claims 7 to 10, moreover comprising a step of sending a warning message when the estimation of the filling rate of a client crosses below a third threshold.

12. Method according to one of claims 7 to 11, moreover comprising a step of sending a warning message when the estimation of the filling rate of a client crosses above a fourth threshold.
